# EUROPÄISCHE PATENTSCHRIFT

(11) **EP 1 593 658 B1**
(45) Veröffentlichungstag und Bekanntmachung des Hinweises auf die Patenterteilung: **05.12.2007**
(21) Anmeldenummer: 05007081.2
(22) Anmeldetag: 31.03.2005
(51) Int. Cl.: C03C 3/118, C03C 3/112, C03C 3/097, C03C 3/093, C03C 3/087, C03C 3/085, C03C 3/083, C03C 21/00

(54) **Gefloatetes Lithium-Aluminosilikat-Flachglas mit hoher Temperaturbeständigkeit, das chemisch und thermisch vorspannbar ist**
Chemically and thermally pre-stressable lithium aluminosilicate float glass of high temperature resistance
Verre flotté en lithioaluminosilicate de haute résistance thermique qui peut être précontraint chimiquement et thermiquement

(30) Priorität: 07.05.2004 DE 102004022629
(43) Veröffentlichungstag der Anmeldung: 09.11.2005
(73) Patentinhaber: Schott AG, 55122 Mainz (DE)
(72) Erfinder: Siebers, Friedrich, Dr., 55283 Nierstein (DE); Lautenschläger, Gerhard, Dr., 07743 Jena (DE); Schneider, Klaus, 99510 Apolda (DE); Sprenger, Andreas, 07751 Rothenstein (DE)
(74) Vertreter: Fuchs

(56) Entgegenhaltungen:
- EP-A- 0 985 644
- US-A- 4 255 199
- US-B1- 6 593 259
- PATENT ABSTRACTS OF JAPAN Bd. 2002, Nr. 06, 4. Juni 2002 (2002-06-04) -& JP 2002 047030 A (CENTRAL GLASS CO LTD), 12. Februar 2002 (2002-02-12)

## Beschreibung

Die Erfindung betrifft ein gefloatetes Lithium-Aluminosilikat-Flachglas mit hoher Temperaturbeständigkeit, das chemisch und thermisch vorspannbar ist.

Bei zahlreichen Spezialglas-Anwendungen wird Flachglas benötigt, beispielsweise in Form von Glasscheiben als Sichtfenster, für Displayzwecke und als Harddisc- Speichersubstrat. Die Herstellung von solchem Flachglas aus der Glasschmelze erfolgt nach den bekannten Verfahren wie Walzen, Ziehen, Gießen oder Floaten. Aufgrund seiner Wirtschaftlichkeit und der hohen Oberflächenqualität der erzeugten Flachgläser hat das Floaten weitgehende Verbreitung gefunden.

Das Floaten von Kalk-Natron-Gläsern und von Spezialgläsern, wie z.B. Borosilikatgläsem oder Aluminosilikatgläsem ist bekannt.

Zur Festigkeitssteigerung von Gläsern werden diese in der Technik chemisch oder thermisch vorgespannt.

Es wurden bereits (thermisch vorgespannte) Brandschutzgläser entwickelt, die die Bedingungen der Feurerwiderstandsklassen G erfüllen (DIN 4102 Teil 13, ISO 834). Dabei müssen die Brandschutzverglasungen einschließlich Rahmen und Halterungen entsprechend den Feuerwiderstandsklassen einer Temperaturbelastung nach der Einheitstemperaturzeitkurve (ETK) gemäß der DIN 4102 (bzw. ISO 834) zwischen 30 und 180 Minuten lang widerstehen und dabei den Durchtritt von Feuer und Rauch verhindern.

Analoge Vorschriften gelten für die Klassen F 30, F 60, F 90 und F 120, wobei sich die Gläser zusätzlich auf der dem Feuer abgewandten Seite im Mittel um nicht mehr als 140°C über die Anfangstemperatur erwärmen dürfen.

Darüber hinaus werden an Gebäudeverglasungen oftmals zusätzliche Anforderungen gestellt. So müssen z. B. Verglasungen in Türen neben dem Brandschutz auch die Sicherheit der Benutzer gewährleisten. Dazu müssen die Verglasungen neben den Anforderungen der Brandschutznormen auch die der einschlägigen Sicherheitsglasnormen (z.B. Einscheibensicherheitsglas DIN 1249, Teil 12 bzw. DIN EN 12150) erfüllen.

So lassen sich Sicherheitsgläser gemäß DIN 1249 herstellen, die im Falle stärkster Beanspruchung in eine Vielzahl nicht scharfkantiger Krümel zerfallen.

Beim thermischen Vorspannen werden geeignete Gläser z.B. in Form zugeschnittener Scheiben auf Temperaturen oberhalb der Transformationstemperatur erwärmt und anschließend durch einen kalten Luftstrom sehr rasch abgekühlt. Durch diesen Aufwärm- und raschen Abkühlvorgang entstehen in der Oberfläche des Glases Druckspannungen und im Inneren Zugspannungen. Daraus resultiert eine beträchtlichen Steigerung der Biegezugfestigkeit des Glases, eine verringerte Empfindlichkeit gegen Temperaturschwankungen und ein hohes Federungsvermögen.

So sind z. B. Brandschutzverglasungen bekannt, bei denen vorgespannte Kalk-Natron-Gläser in entsprechender Dicke verwendet werden. Diese sind z.B. in den Dicken 6-15 mm für Feuerwiderstandszeiten 30 oder 60 Minuten bekannt.

Diese vorgespannten Kalk-Natron-Gläser haben jedoch den Nachteil, daß sie während der bei einer Brandbelastung nach ETK auftretenden Temperaturbelastung zu einem relativ frühen Zeitpunkt (vor der 30. Minute) ihre Erweichungstemperatur überschreiten und die zuvor festen, elastischen Gläser gehen in einen niedrigviskosen, plastischen Zustand über.

Das Erreichen von hohen Feuerwiderstandszeiten hängt jedoch in erster Linie vom Erweichen der Gläser (Erweichungstemperatur logη = 7,6) ab. Weitere Einflußfaktoren sind die Scheibengröße, die Scheibendicke und die Breite der Randabdeckung sowie die Haltekräfte der Scheibe und auch die Beschaffenheit der Rahmen (Material).

Je breiter z.B. die Randabdeckung der Scheibe ist, desto länger wird ein Herausrutschen der Gläser aus dem Randbereich verhindert, wenn die Gläser im Verlaufe der Brandbelastung ihre Erweichungstemperatur erreicht haben.

Gleichzeitig ist jedoch die Breite des abgedeckten Randbereichs, in Zusammenhang mit dem linearen Wärmeausdehnungskoeffizienten des Glases, ein bestimmender Faktor für die Höhe der bei der Brandbelastung zwischen heißer (freistehender) Scheibenmitte und kaltem (abgedecktem) Scheibenrand entstehenden Spannungen.

Überschreiten die im Brandfall entstehenden Spannungen die Festigkeit des Glases, so kommt es unweigerlich zum Bruch der Glasscheibe und somit zum vollkommenen Verlust der Schutzwirkung der Brandschutzverglasung. Daher ist es nicht ohne weiteres möglich, die Randabdeckung der Scheiben beliebig groß zu wählen, um eine möglichst hohe Feuerwiderstandszeit zu erreichen.

Der hohe Wärmeausdehnungskoeffizient und die niedrige Erweichungstemperatur von Kalk-Natron-Glas ist daher für Brandschutzanwendungen von Nachteil.

Beim chemischen Vorspannen wird die Druckspannung in der Oberfläche des Glases durch Ionenaustausch erreicht. Dabei ersetzen Ionen mit größerem Radius, die von außen in das Glas eindringen, kleinere lonen. Infolge des größeren Platzbedarfs der eindringenden lonen wird eine hohe Druckspannung in der Oberfläche erreicht, mit der sich eine Festigkeitssteigerung auf das 5 bis 8fache erreichen lässt.

Meist wird der lonenaustausch mit Alkaliatomen durchgeführt, entweder in Salzschmelzen oder mit Hilfe aufgebrachter Lösungen bzw. Pasten. Üblich ist die Behandlung mit Kaliumatomen, die gegen Natriumatome im Glas ausgetauscht werden. Wichtig ist, dass die Behandlung unterhalb der Transformationstemperatur des Glases erfolgt, weil sich sonst die Druckspannung thermisch durch Entspannung des Glases abbaut. Als günstig für den lonenaustausch hat sich eine Temperatur von etwa 100 °C unterhalb der Transformationstemperatur erwiesen. Bei tieferen Temperaturen werden längere Zeiten für die Behandlung benötigt.

Sowohl beim thermischen als auch chemischen Vorspannen wird der gewünschte Effekt der Festigkeitssteigerung über eine in die Oberfläche des Glases eingebrachte Druckspannung erzeugt.

Die beiden Verfahren unterscheiden sich dabei in wirtschaftlicher und technischer Hinsicht und haben sich daher auch unterschiedliche Anwendungsgebiete erschlossen. Das thermische Vorspannen ist aufgrund der kurzen Prozesszeiten sehr wirtschaftlich. Beim chemischen Vorspannen werden sehr hohe Festigkeiten erreicht.

Gefloatete, und thermisch vorgespannte Kalk-Natron-Gläser finden daher breite Verwendung, z. B. in der Gebäudeverglasung oder als gebogene Windschutzscheiben für die Verglasung von Automobilen. Diese Gläser werden bei der Herstellung üblicherweise einer Sulfatläuterung zum Erreichen der geforderten Blasenzahlen unterzogen.

Gefloatete und thermisch vorgespannte Borosilikatgläser verfügen aufgrund ihrer Zusammensetzung über eine höhere Temperaturbeständigkeit sowie eine höhere chemische Beständigkeit als Kalk-Natron-Gläser. Sie benötigen höhere Schmelztemperaturen und werden mit NaCl geläutert. Gefloatete Borosilikatgläser finden daher dort Anwendung, wo es auf höhere chemische Beständigkeit und höhere Temperaturbeständigkeit ankommt.

Wegen ihrer geringen Al₂O₃- und in der Regel auch niedrigen Li₂O-Gehalte sind sie für das chemische Vorspannen weniger geeignet und stellen einen anderen Glastyp dar.

Es ist bekannt, dass sich Lithium-Aluminosilikatgläser sehr gut chemisch vorspannen lassen. Durch die gute Diffusion des Lithiumatoms lassen sich beim Austausch gegen Natriumatome dickere Druckspannungsschichten in vertretbaren Austauschzeiten erzielen als bei einem Austausch von Natrium- gegen Kaliumatome in einem Li₂O- freiem Glas mit Na₂O als aktiver Komponente.

So beschreibt z. B. die US 4 156 755 ein chemisch vorspannbares Glas mit der Zusammensetzung in Gew.% mit 59-63 SiO₂, 10-13 Na₂O, 4-5,5 Li₂O, 15-23 Al₂O₃ und 2-5 ZrO₂. Durch die hohen Alkaligehalte sind die Schmelztemperaturen erniedrigt. Hohen Anforderungen an die Hitzebeständigkeit und die Temperaturgradientenfestigkeit vermögen diese Gläser infolge ihrer niedrigen Viskositäten und vergleichsweise hohen Wärmeausdehnungskoeffizienten jedoch nicht zu genügen.

In der Schrift US 3 615 320 wird ein chemisch vorgespanntes Flachglas beschrieben, das ebenfalls über hohe Alkaligehalte mit den beschriebenen Nachteilen verfügt mit in Gew.%59-62 SiO₂, 18-23 Al₂O₃, 4-5,5 Li₂O, 7-9 Na₂O, 3-5 B₂O₃. Als Läutermittel werden in der Schrift As₂O₃, NaCl, Sb₂O₃, Al₂(SO₄)₃ genannt.

Die DE 42 06 268 C2 offenbart eine chemisch vorspannbare Glaszusammensetzung enthaltend in Gew.% 62-75 SiO₂, 5-15 Al₂O₃, 4-10 Li₂O, 4-12 Na₂O und 5,5-15 ZrO₂. Auch hier sind die hohen Alkaligehalte nachteilig für Hitzebeständigkeit und Temperaturgradientenfestigkeit. Als Läutermittel werden As₂O₃, Sb₂O₃, F und Cl genannt. Die Schrift gibt keinen Hinweis auf die Herstellung eines Flachglases über den Floatprozess so z. B. auf ein mit dem Floatprozess verträgliches Läutermittel. Die hohen ZrO₂- Gehalte sind unter den Bedingungen des Floatprozesses hinsichtlich der Entglasungsbeständigkeit nachteilig.

Ein floatbares Glas mit hoher Hitzebeständigkeit für den Einsatz als Brandschutzglas wird in der JP 2002047030A1 offenbart. Das Glas ist thermisch vorspannbar und erlaubt die Herstellung eines Sicherheitsglases. Aufgrund des niedrigen Li₂O-Gehaltes von 0,5-2 Gew% bestehen Nachteile für das chemische Vorspannen.

Die DE 100 17 701 C2 beschreibt ein gefloatetes Flachglas, das vorspannbar oder in eine Glaskeramik mit Hochquarz-Mischkristallen oder Keatit-Mischkristallen umwandelbar ist. Die offenbarten Zusammensetzungen enthalten notwendigerweise TiO₂ oder ZrO₂ als Keimbildner. Unter den Prozessbedingungen des Floatens sind diese Glaskeramik-Zusammensetzungen bezüglich ihrer Entglasungsbeständigkeit kritischer als Gläser mit geringen Gehalten an TiO₂ und ZrO₂, die nicht in die genannten Glaskeramiken umwandelbar sind.

Aufgabe der Erfindung ist es, gefloatete Lithium-Aluminosilikat-Flachgläser mit hoher Hitzebeständigkeit bereitzustellen, die sich chemisch und thermisch vorspannen lassen und sich für eine wirtschaftliche und umweltschonende Herstellung eignen.

Die Aufgabe wird durch ein gefloatetes Lithium-Aluminosilikat-Flachglas mit einer Zusammensetzung gelöst, die bezogen auf die Gesamtzusammensetzung als Hauptbestandteile (in Gew.%):

| | |
|---|---|
| Li₂O | 2,5 - 6,0 |
| Al₂O₃ | 15 - 30 |
| SiO₂ | 55 - 75 |

enthält, und wobei die Zusammensetzung hinsichtlich der viskositätsabsenkenden Komponenten

| | |
|---|---|
| Σ Na₂O+K₂O | < 4 Gew.% |
| B₂O₃ | 0 - < 4 Gew.% |

begrenzt ist,
und wobei die für die Herstellung von Glaskeramiken üblichen Keimbildnerzusätze

| | |
|---|---|
| Σ TiO₂ + ZrO₂ | < 2 Gew. % betragen, um die Kristallisation unerwünschter Hochquarz- und/oder Keatit-Mischkristalle zu vermeiden sowie |
| | |
| SnO₂ | in Mengen von 0,1 - 2 Gew.-% als chemisches Läutermittel. |

Das erfindungsgemäße gefloatete Flachglas zeigt
- eine gute Blasenqualität und umweltfreundliche Läuterung ohne die sonst üblichen Läutermittel Arsen- und/oder Antimonoxid,
- eine hohe Hitzebeständigkeit und Temperaturgradientenfestigkeit,
- aufgrund seiner chemisch und thermischen Vorspannbarkeit eine breite Palette von Anwendungsmöglichkeiten mit hohen Anforderungen an Festigkeit und/oder Kratzfestigkeit,
- hohe Steifigkeit und hohe Lichttransmission,
- geringe Dichte und gute chemische Beständigkeit gegen Wasser, Säure und Laugen.

Das Glas wird bei der Schmelze ohne Verwendung der für hochschmelzende Gläser üblichen Läutermittel Arsen- und/oder Antimonoxid geläutert und enthält 0,1 - 2,0 Gew.-% SnO₂ als chemisches Läutermittel. Die Formgebung des Flachglases wird durch Aufgießen auf ein flüssiges Metall in einer reduzierenden Atmosphäre, d.h. nach dem üblichen Floatverfahren, vorgenommen.

Floatanlagen bestehen üblicherweise aus der Schmelzwanne, in der das Glas geschmolzen und geläutert wird, einem Interface, welches den Übergang von der oxidischen Atmosphäre in der Schmelzwanne in die reduzierende Atmosphäre des nachfolgenden Anlageteils, des Floatteils gewährleistet, in dem die Formgebung des Glases durch Aufgießen auf ein flüssiges Metall, meist Sn, in einer reduzierenden Atmosphäre von Formiergas, vorgenommen wird. Die Formgebung des Glases erfolgt durch Glattfließen auf dem Sn-Bad und durch sogenannte Top-Roller, die auf die Glasoberfläche eine Kraft ausüben. Während des Transportes auf dem Metallbad erkaltet das Glas und wird am Ende des Floatteiles abgehoben und in einen Kühlofen überführt.

Während der Bildung der Glasoberfläche und des Transportes im Floatbad können Wechselwirkungen zwischen Glasschmelze, Floatatmosphäre sowie dem Sn-Bad zu störenden Oberflächendefekten führen. Wenn das Glas mehr als 2 Gew.% TiO₂+ ZrO₂ enthält, können sich in der Glasoberfläche im Kontakt zum Sn-Bad Keime bilden, an denen bis zu einigen 100 µm große Hochquarz-Mischkristalle kristallisieren und so eine störende Oberflächenkristallisation bewirken. Bei dem erfindungsgemäßen, gefloateten, chemisch und thermisch vorspannbaren Flachglas wird die Entstehung dieser unerwünschten Oberflächenkristalle beim Floaten durch die Begrenzung der, für die Herstellung von Glaskeramiken üblichen Keimbildner auf Σ TiO₂ +ZrO₂ < 2 Gew.-% vermieden. Die erfindungsgemäßen gefloateten Flachgläser sind damit ßentglasungsbeständiger, allerdings nicht mehr in Glaskeramiken umwandelbar.

Der Gehalt des Glases an Läutermittel SnO₂ ist auf weniger als 2 Gew.% begrenzt. Durch Einwirkung des Formiergases im Floatteil wird das SnO₂ nämlich in der Glasoberfläche zum Teil reduziert. Beu höheren SnO₂- Gehalten entstehen in der unmittelbaren Glasoberfläche Kügelchen aus metallischem Sn im Glas mit Größen von ca. 100 nm. Beim Abkühlen oder Reinigen lassen sich diese zwar entfernen, jedoch bleiben kugelförmige Löcher in der Glasoberfläche zurück, die für die Anwendung äußerst störend sind. Auch können sich bei höheren SnO₂-Gehalten störende Legierungseffekte mit Edelmetalleinbauten aus Pt bzw. Pt/Rh bilden. Diese Materialien finden in Schmelzanlagen Verwendung insbesondere als Elektroden, Auskleidung, Rührer, Transportrohre, Schieber usw.

Li₂O stellt einen wesentlichen Bestandteil für die Durchführung des chemischen Vorspannprozesses des Flachglases dar. Es wird beim chemischen Vorspannen in der Glasoberflächenschicht gegen Ionen mit einem größeren Radius, in erster Linie gegen Natrium- und/oder Kaliumionen ausgetauscht. Durch seine gute Diffusion erlaubt es die Erzeugung hoher Druckspannungen und vergleichsweise großer Dicken der Druckspannungsschicht. Daraus resultieren hohe Festigkeiten. Auch lässt sich der Ionenaustausch bei vergleichsweise tiefen Temperaturen, verglichen mit einem Austausch von Na im Glas gegen Kalium durchführen. Geringere Gehalte als 2,5 Gew.% sind nachteilig für die lonenaustauschbarkeit. Wenn der Li₂O-Gehalt 6 Gew.% übersteigt, verschlechtert sich die chemische Beständigkeit des Glases. Durch die mit der Viskositätserniedrigung einhergehende Absenkung der Transformationstemperatur T_{g} verschlechtert sich die Hitzebeständigkeit. Die Erhöhung des Wärmeausdehnungkoeffizienten des Glases ist nachteilig für die Temperaturgradientenfestigkeit.

Der Al₂O₃-Gehalt soll zwischen 15 bis 30 Gew% betragen. Das Al₂O₃ ist am Aufbau des Glasgerüstes beteiligt. Es fördert die Diffusion der Alkaliionen beim lonenaustausch und ist daher wesentlich zur Förderung der lonenaustauschbarkeit und damit zum Erzielen hoher Festigkeiten beim chemischen Vorspannen. Der Gehalt sollte weniger als 30 Gew% betragen, weil sich sonst die Entglasungsbeständigkeit verschlechtert und die Schmelztemperaturen und Formgebungstemperaturen beim Floaten erhöhen.

SiO₂ ist die hauptsächliche Komponente, die das Glasgerüst bildet. Ist der Mengenanteil geringer als 55 Gew.%, verschlechtern sich die chemische Beständigkeit und die Hitzebeständigkeit, da die thermische Ausdehnung des Glases ansteigt und sich die Transformationstemperatur Tg erniedrigt. Zu hohe Gehalte von SiO₂, größer als 75 Gew.% erhöhen die Schmelztemperatur und die Formgebungstemperatur bei der Herstellung. Diese erhöhten Temperaturen sind technisch und wirtschaftlich für das Schmelzen und Floaten nachteilig, weil sie die Anlagenteile stärker belasten.

Die Alkalien Na₂O, K₂O, sowie B₂O₃ werden oft in Floatgläsern zugesetzt, um die Viskosität zu erniedrigen und damit die Schmelztemperatur und Formgebungstemperaturen abzusenken. Dies ist wirtschaftlich vorteilhaft und für viele Anwendungen, bei denen es nicht auf große Hitzebeständigkeit ankommt, ausreichend. In der vorliegenden Erfindung werden die Gehalte jedoch auf Werte Σ Na₂O+K₂O < 4 Gew.% begrenzt, da hier zusätzlich Anwendungen angestrebt sind, bei denen es auf große Hitzebeständigkeit sowie Temperaturgradientenfestigkeit ankommt. Dadurch ist es möglich, die Transformationstemperatur Tg zu erhöhen und den Wärmeausdehnungskoeffizienten gering zu lassen.

Der B₂O₃-Gehalt soll 4 Gew% nicht übersteigen, weil sich sonst die Transformationstemperatur zu stark erniedrigt. Auch sind höhere B₂O₃-Gehalte nicht verträglich mit den erfindungsgemäßen hohen Al₂O₃-Gehalten des Flachglases, da sich beide Komponenten hinsichtlich der Schmelzbarkeit und Entglasungsfestigkeit ungünstig beeinflussen.

Der Wassergehalt der erfindungsgemäßen Gläser liegt, abhängig von der Wahl der Gemengerohstoffe und von den Prozessbedingungen bei der Schmelze üblicherweise zwischen 0,01 und 0,06 mol/l.

Mit dem erfindungsgemäßen Lithium-Aluminiumsilikat-Flachglas werden Anwendungsbereiche mit hoher Hitzebeständigkeit erschlossen, die für Kalk-Natron-Gläser oder Borosilikatgläser nicht ohne weiteres zugänglich sind. Die angegebenen Zusammensetzungsbereiche stellen einen Kompromiss dar zwischen der hohen Hitzebeständigkeit und der wirtschaftlichen Herstellung über Schmelze und Formgebung durch Floaten. Die Gläser sind bei Schmelztemperaturen von ca. 1600 bis 1650 °C mit akzeptablen Durchsätzen einschmelzbar und lassen sich auf Floatanlagen mit geringen Modifizierungen technisch herstellen. Entglasung und andere Oberflächendefekte sind technisch beherrschbar, die Läuterung wird statt über übliche Sulfat- oder Chlorid-Läuterung durch das Hochtemperaturläutermittel SnO₂ als Hauptläutermittel bewerkstelligt.

Der besondere wirtschaftliche Vorteil des genannten Glaszusammensetzungsbereiches ist es, dass mit der erfindungsgemäß gleichen Zusammensetzung sowohl thermisch als auch chemisch vorspannbare Flachgläser hergestellt werden können. Schwieriges und auch zeitaufwendiges Umschmelzen zwischen verschiedenen Zusammensetzungen kann somit vermieden werden. Auch die Fertigungslogistik wird zum Beispiel hinsichtlich der Gemengerohstoffe und der Scherbenbevorratung vereinfacht. Aus dem gelagerten Glas können die verschiedenen Produkte über Nachverarbeitung, gemäß der Marktnachfrage hergestellt werden. Dabei ergänzen sich das thermische und chemische Vorspannen hinsichtlich ihrer Eigenschaftsprofile und erlauben es, verschiedene Anforderungen optimal zu bedienen.

Durch das technisch aufwendigere chemisches Vorspannen lassen sich in der Glasoberfläche höhere Druckspannungen und damit auch höhere Festigkeiten erzielen. Die Dicke der Druckspannungsschicht an der Oberfläche beträgt dabei bis zu einigen 100µm und in der Regel weniger als bei dem thermischen Vorspannen. Vorteilhaft ist dabei, dass sich anders als beim thermischen Vorspannen auch Flachgläser mit weniger als ca. 3 mm Dicke vorspannen lassen.

Chemisch vorgespannte Flachgläser werden aufgrund ihrer höheren Festigkeit und Kratzfestigkeit für Anwendungen mit besonders hohen Anforderungen, so z. B. in der Luftfahrt- oder Raumfahrtverglasung, als Uhrenglas, Kesselschauglas, für Zentrifugengläser und im Beleuchtungssektor und als Sicherheitsglas eingesetzt. Gegenüber thermisch vorgespannten Gläsern sind die Zugspannungen im Glasinnern chemisch vorgespannter Gläser geringer. Prinzipbedingt nehmen die Zugspannungen im Glasinneren mit der Dicke des Flachglases ab. Wenn die Zugspannungen unter der Festigkeitsgrenze bleiben, lassen sich die chemisch vorgespannten Flächgläser sogar bearbeiten.

Das thermische Vorspannen ist aufgrund der kurzen Prozesszeiten sehr wirtschaftlich. Die erzielte Festigkeitssteigerung ist für viele Anwendungen, zum Beispiel für den Einsatz als thermisch vorgespanntes Brandschutzsicherheitsglas ausreichend. Die Dicke der Druckspannungsschicht an der Oberfläche des Glases ist prinzipbedingt größer als beim chemischen Vorspannen.

In einer bevorzugten Ausführung wird das gefloatete Lithium-Aluminosilikat-Flachglas durch ein lonenaustauschverfahren mit einem lon, das über einen größeren lonenradius verfügt, chemisch vorgespannt. Das Flachglas besitzt dadurch an der Oberfläche eine geringere Lithiumkonzentration und erhöhte Konzentration des gegen Li ausgetauschten Kations. Bevorzugt wird das Lithium gegen Natrium- und/oder Kaliumionen ausgetauscht, die an der Oberfläche angereichert sind und dadurch, aufgrund ihres höheren Platzbedarfs, eine Druckspannungsschicht erzeugen.

Wird der lonenaustausch durch Natrium-lonen gegen die Litium-lonen im Glas durchgeführt, lassen sich bei gleichen Austauschtemperaturen und -zeiten größere Druckspannungsschichten realisieren als mit Kalium-lonen. Dies ist in dem höheren Diffusionsvermögen des Natrium-Ions, verglichen mit dem Kalium-Ion begründet. Der lonenaustausch durch Kalium-lonen führt bei gleichen Prozessbedingungen zu dünneren Druckspannungsschichten, die über höhere Werte der Druckspannung an der Oberfläche verfügen.

Wenn der lonenaustausch durch eine Kombination von Natrium- und Kalium-lonen in einem gemeinsamen Vorspannprozess oder zeitlich nacheinander erfolgt, lassen sich sogar Druckspannungsprofile aus mehreren Zonen erzeugen. Beispielsweise ist ein Druckspannungsprofil möglich, bei dem sich an eine 10 bis 40 µm dicke Zone unmittelbar an der Oberfläche mit hoher Druckspannung eine zweite einige 100 µm dicke Zone zum Inneren anschließt, die über eine niedrigere Druckspannung verfügt. Ein solches Druckspannungsprofil ist günstig für Knoop-Härte, Festigkeit und verleiht dem vorgespannten Flachglas eine gute Verletzungsunanfälligkeit, weil größere Kerbrisse nicht bis zur Zugspannungszone im Inneren des Glases vordringen können, wo sie den Bruch auslösen.

Durch Wahl der austauschenden Kationen und durch die Prozessbedingungen kann das Druckspannungsprofil für die jeweiligen Anforderungen optimiert werden. Abhängig von der Dicke des Flachglases und dem eingestellten Drucksparinungsprofil sowie der Zugspannung im Glasinneren lassen sich die chemisch vorgespannten Flachgläser mechanisch bearbeiten (Schneiden, Bohren, Randbearbeiten) oder verfügen über Sicherheitsglaseigenschaften mit dem in DIN 1249 geforderten Krümelbild.

Damit werden für chemisch vorgespannte Gläser weitere Anwendungsgebiete erschlossen, die vorher nur thermisch vorgespannten Gläsern vorbehalten waren.

Verfahrenstechnisch kann der lonenaustausch in einem Behandlungsbad aus einer Salzschmelze durchgeführt werden oder es werden Lösungen oder Pasten auf die Glasoberfläche aufgebracht. Geeignete Verbindungen für den lonenaustausch sind Nitrate, Sulfate, Bisulfate, Carbonate, Bicarbonate und Halogenide, sowie Doppelsalze. Auch Mischungen aus den genannten Verbindungen können eingesetzt werden. Die Wahl der Verbindungen für den lonenaustausch erfolgt abhängig von den verfahrenstechnischen Parametern, wie Temperatur und Zeit des lonenaustausches, dem gewünschten Druckspannungsprofil, der erforderlichen Festigkeits-steigerung und abhängig davon, dass das lonenaustauschverfahren die Oberfläche des Glases nicht angreift und anhaftende Verbindungsreste leicht entfernt werden können.

Wenn der lonenaustausch durch Salzschmelzen durchgeführt wird, die Nitrate enthalten, muss die Zersetzungstemperatur der Nitrate beachtet werden. Durch die Zersetzung kann sich die Oberflächenqualität des Glases verschlechtern und gesundheitsschädliche Dämpfe werden freigesetzt. Nitrat/Nitrid-Behandlungsbäder können deshalb technisch sinnvoll bis zu Temperaturen von etwa 430°C benutzt werden. Durch Zumischung der entsprechenden SulfatVerbindungen zu den Nitrat-Salzschmelzen lässt sich die zulässige Austauschtemperatur erhöhen.

Bei Verwendung von Chlorid-Salzen in dem Austauschmedium können diese bei höheren Konzentrationen und Temperaturen die Glasoberfläche angreifen.

Der lonenaustausch kann in bekannter Weise durch Anlegen eines elektrischen Feldes während des lonenaustauschprozesses beschleunigt werden.

Gemäß dem Stand der Technik kann die zum lonenaustausch geeignete Verbindung statt als Salzschmelze auch als Lösung oder Paste mit bekannten Beschichtungsverfahren auf die Glasoberfläche aufgebracht werden. Die Paste kann neben der pulverförmigen Verbindung auch ein Pulver aus einem inerten Medium, wie zum Beispiel aus Oxiden des Eisens, Titans oder Siliziums enthalten. Auch mineralische Verbindungen, wie z B. Feldspäte können zugemischt werden. Der lonenaustausch erfolgt in einer Festkörperreaktion. Die Vorteile des Verfahrens und geeignete Verfahrensparameter sind in der DE 3 840 071 C2 und den Ausführungsbeispielen offenbart.

Wie oben bereits dargelegt, weist das chemisch vorspannbare Flachglas der vorliegenden Erfindung in den angegebenen Zusammensetzungsbereichen eine ausgezeichnete Fähigkeit zum Ionenaustausch auf. In bevorzugter Ausführung besitzt die durch lonenaustausch erzeugte Druckspannungsschicht an der Glasoberfläche eine Dicke von mindestens 20 µm, bevorzugt mehr als 200 µm, wodurch das chemisch vorgespannte Flachglas eine hohe Festigkeit erhält.

Die Druckspannung in der Oberfläche des chemisch vorgespannten Flachglases beträgt vorteilhafterweise mehr als 80 MPa, bevorzugt mehr als 200 MPa. Die hohen Druckspannungen führen zu der gewünschten hohen Festigkeit, sowie einer erhöhten Knoop-Härte und damit verbesserter Kratzfestigkeit.

Ein chemisch vorgespanntes Flachglas mit besonders günstigen Anwendungseigenschaften besitzt lonenaustauschzeiten von 15 Minuten bis 100 Stunden, bevorzugt weniger als 50 Stunden und wird bei Temperaturen von 300 bis 650 °C, aber unterhalb der Transformationstemperatur Tg des Glases behandelt. Wenn der lonenaustausch bei Temperaturen in der Nähe der Transformationstemperatur Tg oder sogar darüber ausgeführt wird, können die eingebauten Druckspannungen bereits relaxieren, wodurch der Effekt der Festigkeitserhöhung vermindert wird. Die Relaxation macht sich bereits ab etwa 100°C unterhalb Tg bemerkbar.

Durch die Wahl von Temperatur und Zeit des lonenaustausches lässt sich das Druckspannungsprofil in der Glasoberfläche einstellen. So führen z. B verlängerte Austauschzeiten bei gleicher Temperatur zu einer dickeren Druckspannungsschicht bei verringerter Höhe der Druckspannung in der unmittelbaren Glasoberfläche.

Bevorzugt haben die erfindungsgemäßen gefloateten, chemisch vorgespannten Flachgläser eine Biegezugfestigkeit von größer als 300 MPa. bevorzugt größer als 600 MPa und besitzen dadurch eine ausgezeichnete Widerstandskraft gegen Zerstörung.

In einer zweiten, alternativen erfindungsgemäßen Ausgestaltung wird das gefloatete Flachglas thermisch vorgespannt.

Das thermische Vorspannen kann über verschiedene Medien, zum Beispiel durch Eintauchen in ölbeschichtetes Wasser erfolgen. Dies ist jedoch technisch aufwendiger und wesentlich kostenintensiver als das Abschrecken mit Luft in herkömmlichen Luftvorspannanlagen. Bevorzugt wird daher das erfindungsgemäße Flachglas auf eine Temperatur oberhalb Tg erhitzt und durch Anblasen mit kalter Luft thermisch vorgespannt. Das thermische Vorspannen durch Anblasen mit Luft ist ein besonders wirtschaftliches Verfahren, um Sicherheitsgläser zum Beispiel für den Brandschutz oder die Durchsicht , z. B. als Kesselschaugläser herzustellen. Bevorzugt wird der Prozess des thermischen Vorspannens so durchgeführt, dass das Flachglas eine Oberflächendruckspannung von > 40 MPa und weiter bevorzugt von > 120 MPa besitzt und die Dicke der Druckspannungsschicht größer ist als 200 µm, bevorzugt größer als 500 µm. Damit werden die für das Krümelbild nach DIN 1249 geforderten Sicherheitsglaseigenschaften erreicht.

Das gefloatete Flachglas besitzt bevorzugt einen Wärmeausdehnungskoeffizienten α_{20/300} zwischen 3,5 und 5,0 · 10⁻⁶/K, eine Transformationstemperatur Tg zwischen 580 °C und 720 °C und eine Verarbeitungstemperatur V_{A} zwischen 1240 und 1340 °C. Liegt der Wärmeausdehnungskoeffizient unter 3,5 10⁻⁶/K, so ist es schwierig, mit herkömmlichen Luftvorspannanlagen eine für den Krümelbruch nach DIN 1249 ausreichende Druckvorspannung zu erreichen. Zum Erreichen einer hohen Temperaturgradientenfestigkeit soll der Wärmeausdehnungskoeffizient α_{20/300} nicht mehr als 5,0 ·10⁻⁶/K betragen. Die Transformationstemperatur Tg des gefloateten Flachglases soll zwischen 580 und 720 °C liegen. Solche im Vergleich zu üblichen Kalk-Natron- oder Borosilikatgläsem hohen Transformationstemperaturen sind positiv für das Erreichen einer hohen Temperaturbeständigkeit sowie einer hohen Druckvorspannung und damit Festigkeit. Die Transformationstemperatur soll 720 °C nicht überschreiten, da sonst technisch wesentlich aufwendigere Vorspannanlagen erforderlich sind. Die Verarbeitungstemperatur V_{A} liegt unter 1340 °C, um das Einschmelzen zu erleichtern und die thermische Belastung des Floatbades zu begrenzen. Die Verarbeitungstemperatur V_{A} liegt oberhalb 1240 °C, um die gewünschte hohe Temperaturbeständigkeit zu erzielen. Dies ist zum Beispiel bei Brandschutzanwendung vorteilhaft, damit das Glas nicht aus dem Rahmen fließt oder sich zu stark verbeult.

Die durch das thermische oder chemische Vorspannen erzeugte Druckspannung an der Glasoberfläche wirkt der Entstehung von Kratzern oder Rissen durch äußere Krafteinwirkung entgegen, da zunächst die Druckspannung abgebaut werden muss, ehe die Oberfläche geschädigt werden kann. Dadurch wird die Kratzfestigkeit der vorgespannten Gläser erhöht. Chemisches Vorspannen ist hier besonders wirksam, weil es besonders hohe Druckspannungen in der Glasoberfläche erzeugen kann. Eine bevorzugte Ausführung des gefloateten Flachglases besitzt eine hohe Kratzfestigkeit mit einer Knoop-Härte von > 500, bevorzugt > 550.

Für Anwendungen, bei denen ein niedriges Gewicht des Glasbauteils gewünscht ist, wie zum Beispiel in der Luftfahrt- oder Raumfahrtverglasung sowie der Verkehrstechnik, ist es vorteilhaft, wenn das eingesetzte Flachglas über eine niedrige Dichte verfügt. Um diesen Anforderungen zu genügen, sollte das Glas über eine Dichte von weniger als 2,5 g/cm³ bevorzugt weniger als 2,42 g/cm³ verfügen.

Bei vielen Anwendungen in der Verglasung oder als Substrat, zum Beispiel für Harddiscs ist eine hohe Steifigkeit des Glases vorteilhaft. Um diesen Anforderungen zu genügen, soll das E-Modul Werte von E > 70 GPa bevorzugt > 80 GPa besitzen.

Durch eine gute chemische Beständigkeit gegen Wasser, Säuren und Laugen können die erfindungsgemäßen gefloateten Flachgläser auch Anwendungen bedienen, die hier erhöhte Anforderungen stellen, zum Beispiel bei Einwirkung von chemisch aggressiven Lösungen oder Atmosphären. Die hydrolytische Beständigkeit nach DIN ISO 719 soll Klasse 1, die Laugenbeständigkeit nach DIN ISO 695 mindestens Klasse 2 und die Säurenbeständigkeit nach DIN 12116 mindestens Klasse 3 betragen.

In einer bevorzugten Ausführung der Erfindung hat das gefloatete Flachglas eine Zusammensetzung, die in Gew%, bezogen auf die Gesamtzusammensetzung als Hauptbestandteile enthält (in Gew.%):

| | |
|---|---|
| Li₂O | 3,0 - 6,0 |
| Σ Na₂O+K₂O | < 2 |
| Σ MgO+CaO+SrO+BaO | < 4 |
| ZnO | 0 - 1,5 |
| B₂O₃ | 0 - <4 |
| Al₂O₃ | 18 - 28 |
| SiO₂ | 60 - 72 |
| Σ TiO₂+ZrO₂ | < 2 |
| SnO₂ | 0,1 - 2,0 (als Läutermittel) |
| F | 0-2 |
| P₂O₅ | 0 - 3 |

Diese Zusammensetzung verfügt über besonders gute Temperaturbeständigkeit bei weiterhin guten Vorspanneigenschaften.

Um ein bevorzugtes Ziel der Erfindung zu erreichen, ein Flachglas bereitzustellen, das sowohl für Herstellprozess über Floaten, als auch für eine Vielzahl von Anwendungen über besonders günstige Eigenschaftskombinationen verfügt, soll der Wärmeausdehnungskoeffizient α_{20/300} zwischen 3,8 und 4,5 · 10⁻⁶/K liegen, die Transformationstemperatur Tg zwischen 600 und 680 °C liegen und der V_{A} zwischen 1280 und 1320 °C liegen. Gemäß dieser bevorzugten Ausführung hat das gefloatete Flachglas eine Zusammensetzung, die in Gew.% bezogen auf die Gesamtzusammensetzung als Hauptbestandteile enthält:

| | |
|---|---|
| Li₂O | 3,5 - 5,0 |
| Σ Na₂O+K₂O | < 1,5 |
| Σ MgO+CaO+SrO+BaO | < 3 |
| ZnO | 0 - 1,0 |
| B₂O₃ | 0 < 3 |
| Al₂O₃ | 19 - 26 |
| SiO₂ | 62 - 70 |
| Σ TiO₂+ZrO₂ | < 1,5 um die Kristallisation unerwünschter Hochquarz- und/oder Keatit-Mischkristalle zu vermeiden |
| SnO₂ | 0,1 - 1,0 als Läutermittel |
| F | 0 - 1,8 |
| P₂O₅ | 0 - 2 |

Der Zusatz von Fluor hat sich technisch als besonders vorteilhaft erwiesen, um in Flachgläsern mit den angegebenen Zusammensetzungsbereichen die Verarbeitungstemperatur V_{A} abzusenken und eine zu hohe Transformationstemperatur T₉ zu erniedrigen. Dabei ist besonders vorteilhaft, dass der Wärmeausdehnungskoeffizient dabei geringfügig erniedrigt wird. Diese Wirkung ist gegenläufig zu den Wirkungen der meistens viskositätserniedrigenden Zusätze, wie zum Beispiel der Alkali- oder Erdalkalioxide. Aufgrund der starken Wirkung werden dabei nur relativ geringe Zusätze von Fluor benötigt. In bevorzugter Ausführung beträgt der Fluorgehalt 0,1-1,2 Gew.% bezogen auf die Gesamtzusammensetzung. Höhere Fluorgehalte als 1,2 Gew.% sind nachteilig, weil sie die chemische Beständigkeit des Glases verschlechtern und weil die Druckspannung in thermisch vorgespannten Gläsern bei niedrigeren Temperaturen relaxiert.

Die für die chemischen Läutermittel Arsen- und/oder Antimonoxid geltende Umweltproblematik trifft, wenn auch in geringerem Maße, auf das Bariumoxid zu. Bariumhaltige Rohstoffe, insbesondere wenn sie wasserlöslich sind, wie Bariumchlorid und Bariumnitrat, sind toxisch und erfordern besondere Vorsichtsmaßnahmen beim Einsatz. In den erfindungsgemäßen Flachgläsern ist es mit Vorteil möglich, auf den Zusatz von BaO bis auf technisch unvermeidbare Spuren zu verzichten.

Zum Erreichen besonders guter Blasenqualitäten kann es vorteilhaft sein, neben dem eingesetzten Läutermittel SnO₂ wenigstens ein weiteres mit dem Floatprozess verträgliches, chemisches Läuterhilfsmittel zuzusetzen, wie zum Beispiel Ceroxid, Sulfatverbindungen, Chloridverbindungen oder Fluorverbindungen. Alternativ kann das Flachglas auch so ausgebildet sein, dass zum Erreichen einer geringen Blasenzahl die Glasschmelze physikalisch, zum Beispiel mittels Unterdruckläuterung oder mittels Hochtemperaturläuterung > 1680 bevorzugt > 1730 °C geläutert ist. Bei besonders hohen Anforderungen an die Blasenqualität kann es notwendig werden, chemische Läuterung und physikalische Läuterverfahren zu kombinieren.

Es ist möglich, einen Teil des Al₂O₃, bis zu ca 4 Gew.%, durch chemisch verwandte dreiwertige Oxide, insbesondere La₂O₃ und Y₂O₃ zu ersetzen. Hierdurch können Schmelz- und Entglasungseigenschaften und E-Modul verbessert werden, allerdings ergeben sich höhere Rohstoffkosten.

Für Anwendungen des Glases, zum Beispiel für Verglasungen wie z.B. als Brandschutzsicherheitsglas, ist typischerweise eine hohe Lichttransmission erforderlich. Auch soll das Glas über möglichst geringe Eigenfärbung verfügen, das heißt der Farbort soll in der Nähe des Unbuntpunktes liegen. Einschlägige Normen für den Einsatz von Brandschutzsicherheitsglas im Baubereich fordern eine Lichttransmission bei 4 mm Dicke von > 90%. Es hat sich gezeigt dass die geforderte Lichttransmission bei 4mm Dicke von > 90 bevorzugt > 91 %, gemäß einer Ausgestaltung der Erfindung durch Gehalte von weniger als 250 ppm Fe₂O₃ und weniger als 1 Gew.% TiO₂ erreicht werden kann.

In Fällen bei denen das gefloatete Flachglas vor UV- oder Infrarotstrahlung schützen soll, kann es vorteilhaft sein, dem Flachglas UV- oder IR-absorbierende Zusätze in Gehalten von typischerweise < 1 Gew.% zuzugeben. Das kann zum Beispiel dann erforderlich sein, wenn das Flachglas im Außenbereich eingesetzt wird und vor der UV-Strahlung der Sonne geschützt werden soll. Auch im Beleuchtungssektor kann die Lichtquelle UV- oder IR-Strahlung aussenden. UV-Strahlung kann gesundheitsschädlich sein oder kann bei Konstruktionen, in denen Kunststoffdichtungen eingesetzt werden, zu deren Versprödung führen. Als UV- oder IR-absorbierende Zusätze werden zum Beispiel Eisenoxid, Selenoxid, Ceroxid, Nickeloxid, Kobaltoxid, Kupferoxid, Titanoxid eingesetzt.

Um einen vorhandenen Farbstich zu vermindern und den Farbort in die Nähe des Unbuntpunktes zu verschieben, können vorteilhaft Entfärbemittel, wie zum Beispiel Manganoxid und/oder Selenoxid dem Flachglas zugesetzt werden.

Ebenso können Überfärbemittel, wie zum Beispiel Kobaltoxid, Nickeloxid, Chromoxid oder Seltenerdoxide zugesetzt werden. Während die Wirkung der Entfärbemittel darauf beruht, dass zum Beispiel der auf Fe₂O₃-Kontamination der Rohstoffe beruhende Farbstich vermindert wird, beruht die Wirkung der Überfärbemittel darauf, dass sie in Bereichen des sichtbaren Spektrums absorbieren, in denen zum Beispiel das Fe₂O₃ nicht absorbiert. Dadurch erscheint das Flachglas dem Betrachter farbneutral, allerdings wird bei dem Überfärbeverfahren die Lichttransmission insgesamt vermindert, das Glas erhält einen leichten kaum wahrnehmbaren Graustich. Auch Zusätze von UV- bzw. IRabsorbierenden Stoffen können einen Farbstich erzeugen, der durch Entfärbe- oder Überfärbemittel verringert werden kann.

Für spezielle Verglasungen z.B. als Filterglas in der Beleuchtungstechnik oder um bestimmte Designwirkung zu erzielen, ist in einigen Fällen auch eine Einfärbung von Gläsern erwünscht. Für solche Anwendungen kann das erfindungsgemäße gefloatete Flachglas mit üblichen Färbemitteln, wie zum Beispiel Vanadin-, Chrom-, Eisen-, Kupfer-, Nickelverbindungen eingefärbt werden, so dass die Lichttransmission bei 4 mm Dicke < 80% beträgt.

Wenn eine Beschichtung des Flachglases gewünscht ist, ist es wirtschaftlich vorteilhaft, die Restwärme des Glases aus dem Floatprozess auszunutzen und diese Beschichtung im Floatteil und/oder vor Abkühlen des Glases vorzunehmen. Auf diese Weise können eine oder mehrere Schichten zum Beispiel aus SiO₂, TiO₂, SnO₂, Al₂O₃, WO₃, VO₂ oder leitfähige Indium/SnO-Schichten aufgebracht werden.

Durch die hohe Oberflächenqualität des Floatprozesses ergeben sich bei den Flachgläsern ästhetische Vorteile. Sterne, Lichtreflexe bei der Aufsicht und Verzerrung bei der Durchsicht werden vermieden. Die Verwendung kann ohne kostspielige Politur der Oberfläche erfolgen. Bei der Verwendung zum Beispiel als Kaminsichtscheibe, Backofenscheibe oder im Beleuchtungssektor, sowie in der Verglasung ist die Floatoberfläche wesentlich unempfindlicher gegenüber dem Anhaften von Verschmutzungen und lässt sich leichter reinigen als zum Beispiel eine über Walzformgebung hergestellte Oberfläche mit ihrer Mikrorauhigkeit.

Vorzugsweise findet das erfindungsgemäße gefloatete Flachglas nach thermischem oder chemischem Vorspannen Verwendung für Anwendungen mit hohen Anforderungen an die Festigkeit und/oder Kratzfestigkeit, wie zum Beispiel als Sicherheitsglas in der Luftfahrt- oder Raumfahrtverglasung, sowie in der Verkehrstechnik, als Kesselschauglas, Zentrifugenglas, Uhrenglas, als Abdeckung in Scannergeräten, Harddisc-Speichersubstrat sowie bei der Verglasung von Räumen, in denen ein hoher Temperaturgradient zwischen innen und außen vorhanden ist. Aufgrund seiner hohen Temperaturbeständigkeit werden auch Verwendungen im Beleuchtungssektor, als Brandschutzverglasung oder als Backofen- bzw. Kaminsichtscheiben vorteilhaft bedient.

Die vorliegende Erfindung wird mit Hilfe der folgenden Beispiele weiter deutlich.

Für einige Ausführungsbeispiele sind in Tabelle 1 Zusammensetzungen und Eigenschaften gefloateter Flachgläser aufgeführt. Dabei handelt es sich bei Beispiel 1 bis 10 um erfindungsgemäße Gläser, bei Beispiel 11 und 12 um Vergleichsbeispiele außerhalb der vorliegenden Erfindung. In Tabelle 2 sind die Verfahrensparameter beim chemischen Vorspannen und die resultierenden Eigenschaften der dazugehörigen Gläser zusammengestellt.

Die Ausgangsgläser von Tabelle 1 wurden unter Verwendung von in der Glasindustrie üblichen Rohstoffen bei Temperaturen von 1620 °C geschmolzen und geläutert. Nach dem Schmelzen in Tiegeln aus gesintertem Kieselglas wurden die Schmelzen in Platintiegel umgegossen und bei Temperaturen von 1550 °C über 30 Minuten durch Rühren homogenisiert. Nach Abstehen von 2 Stunden bei 1640 °C wurden Gussstücke von ca. 140 x 100 x 30 mm Größe gegossen und in einem Kühlofen beginnend ab ca. 670 °C auf Raumtemperatur abgekühlt, um thermisch bedingte Spannungen abzubauen. Aus diesen Gussstücken wurden die Prüfmuster, wie zum Beispiel Stäbe für die Messung des thermischen

Wärmeausdehnungskoeffizienten und die Transformationstemperatur Tg, sowie Platten für die Vorspannversuche herauspräpariert.

Die Analyse ergibt, dass ca. 10 - 30% des Fluors aus dem eingesetzten Gemenge verdampfen. Die Werte in Tabelle 1 entsprechen den in den Gläsern verbliebenen Fluor-Gehalten. Der Wassergehalt der Gläser wird mit Infrarot-Messung bestimmt und beträgt zwischen 0,015 und 0,040 mol/l. Der durch die eingesetzte Gemengerohstoffe bedingte Eisengehalt in den Beispielen beträgt 100 bis 150 ppm.

An den erschmolzenen Gläsern wurden die Dichte, die Transformationstemperatur Tg, die Verarbeitungstemperatur V_{A}, der Wärmeausdehnungskoeffizient im Temperaturbereich zwischen 20 und 300 °C, der Lichttransmissionsgrad τ im Bereich des sichtbaren Lichtes für 4mm Dicke und das E-Modul bestimmt.

Die chemische Beständigkeit der Gläser wurde gemessen (hydrolytische Beständigkeit nach DIN ISO 719, Laugenbeständigkeit nach DIN ISO 695 und Säurenbeständigkeit nach DIN 12116).

Wie aus Tabelle 1 ersichtlich werden mit den erfindungsgemäßen Gläsern Nummer 1 bis 10 die Anforderungen an das gefloatete Flachglas erfüllt.

Demgegenüber besitzt das Vergleichsbeispiel 11, entnommen aus Patent DE 42 06 268 C2, Beispiel 4, gegenüber den erfindungsgemäßen Gläsern aufgrund seiner Zusammensetzung eine vergleichsweise niedrige Viskosität, die Transformationstemperatur Tg ist niedrig, auch der Wärmeausdehnungskoeffizient ist erhöht, sodass dieses Glas für Verwendungen bei denen eine hohe Temperaturbeständigkeit gefordert ist, wenig geeignet ist. Die Glaszusammensetzung in Vergleichsbeispiel 12 entspricht einer im Handel erhältlichen chemisch vorspannbaren Glaszusammensetzung und hat aufgrund ihres hohen Gehaltes an Na₂O und K₂O ebenfalls den mit dem hohenWärmeausdehnungskoeffizienten verbundenen Nachteil mangelnder Temperaturbeständigkeit.

Gläser aus Tabelle 1 wurden gemäß den aus Tabelle 2 ersichtlichen Beispielen chemisch vorgespannt. Tabelle 2 zeigt die Verfahrensparameter beim Vorspannen durch lonenaustausch in Salzbädern und durch aufgebrachte Pasten. Bei Beispiel 29 wurde das chemischen Vorspannen mit einer Paste bestehend aus pulverförmigen Kalium-Sulfat und Kalifeldspat in gleichen Anteilen durchgeführt. Die pulverförmigen Bestandteile wurden mit einem ausbrennbaren Anpastöl und Ethanol als Verflüssigungsmittel zu einer sprühbaren Paste angerührt. Bei Beispiel 31 besteht die Paste aus gleichen Pulveranteilen von Kalium-Sulfat, Natrium-Sulfat und Kalifeldspat. Die Pulvermischung wurde mit Anpastöl und Ethanol angerührt. Nach dem Aufbringen der Paste auf die Glasplatten wurden diese bei den angegebenen Temperaturen und Zeiten behandelt, um den lonenaustausch durchzuführen.

Die Knoop-Härte wird an vorgespannten Proben gemäß DIN ISO 9385 bestimmt.

Die Dicke der Druckspannungsschicht wird an 1 mm dicken vor dem Vorspannen polierten' Platten spannungsoptisch gemessen. Die gemessene Oberflächendruckspannung wird mit der spannungsoptischen Konstante umgerechnet. So beträgt bei Beispiel 13 mit einer spannungsoptischen Konstante von 3,0*10⁻⁶ mm²/N die gemessene Oberflächendruckspannung 8610 nm/cm und die Umrechnung ergibt eine Druckspannung von 286 MPa (s. Tabelle 2). Im Glasinneren beträgt die Zugspannung umgerechnet 26 MPa.

Für ausgewählte Gläser wurde an vorgespannten Platten der Abmessung 50 mm x 50 mm x 5 mm die mittlere Biegezugfestigkeit mit der Doppelringmethode nach DIN EN 1288-5 gemessen. Die Platten besitzen sehr hohe Biegezugfestigkeiten.

In Beispiel 32 wird durch chemisches Vorspannen in einem Salzbad bestehend aus Natrium- und Kalium-Salzen das in der Erfindung gesondert aufgeführte Druckspannungsprofil erzeugt. In der ersten 12 µm breiten Zone an der Oberfläche der Glasprobe beträgt die Druckspannung 368 MPa, in der zweiten 490 µm dicken Zone zum Inneren des Glases 225 MPa.

### Beispiel 33

Bei diesem nicht in der Tabelle 2 aufgeführten Beispiel wurden aus dem Glas Nr. 9 der Tabelle 1 vier Platten der Abmessungen 250 mm x 250 mm x 5 mm präpariert und beidseitig poliert. Die Platten wurden in einem Vorspannofen thermisch vorgespannt durch Erhitzen auf 700°C und anschließendes Anblasen mit kalter Luft.

Anschließend wurde die Feuerwiderstandszeit in einem Brandversuch für 120 min im Vergleich mit einem ebenfalls thermisch vorgespannten Alkaliborosilicatglas derselben Abmessung geprüft. Die Prüfbedingungen waren für beide Glastypen gleich.

Erwartungsgemäß trat bei keinem der Gläser ein vorzeitiger Ausfall ein; lediglich in der Verformung - bedingt durch das Abfließen und anschließende Ausbauchen der Scheiben - konnten große Unterschiede festgestellt werden: die maximale Deformation betrug beim Alkaliborosilicatglas zwischen 24 und 28 mm, während das Glas aus Beispiel 31 nur 6 mm erreichte. Derart niedrige Deformationswerte erlauben sehr lange Standzeiten im Brandfall.

Weitere thermisch vorgespannte Probescheiben des Beispielglases - ebenfalls mit den Abmessungen 250 mm x 250 mm x 5 mm - wurden dem Krümeltest nach DIN 1249 unterzogen, bei dem die Anzahl der Bruchstücke in einer definierten Zählmaske, die Fläche des größten Krümelstücks sowie dessen Länge erfaßt werden. Die Normforderung gibt mindestens 30 Stück auf 100 cm² vor.

In einem Zählfeld von 5 cm x 5 cm fanden sich 28 Krümel; hochgerechnet auf das Normfeld also 112 Krümel. Die Forderungen der DIN 1249 werden durch die erfindungsgemäßen Glaszusammensetzungen also bei weitem überboten.

**Tabelle 1: Zusammensetzungen und Eigenschaften von Gläsern**

| **Beispiele Nr.** | | **1** | **2** | **3** | **4** | **5** | **6** | **7** | **8** | **9** | **10** | **11** | **12** |
|---|---|---|---|---|---|---|---|---|---|---|---|---|---|
| **Glas Nr.** | | **1** | **2** | **3** | **4** | **5** | **6** | **7** | **8** | **9** | **10** | **11** | **12** |
| | | | | | | | | | | | | | |

| Zusammensetzung | | | | | | | | | | | | | |
|---|---|---|---|---|---|---|---|---|---|---|---|---|---|
| SiO₂ | (Gew%) | 66,5 | 67,0 | 66,3 | 67,0 | 66,3 | 66,3 | 65,5 | 67,3 | 67,5 | 67,4 | 68,00 | 62,6 |
| Al₂O₃ | (Gew%) | 23,4 | 24,0 | 23,4 | 23,5 | 23,35 | 23,4 | 23,2 | 23,6 | 23,4 | 23,4 | 13,00 | 16,55 |
| Li₂O | (Gew%) | 4,25 | 4,2 | 4,2 | 4,25 | 4,2 | 4,2 | 4,2 | 4,3 | 4,25 | 4,2 | 8,00 | |
| Na₂O | (Gew%) | 0,5 | 1,0 | 0,8 | 0,6 | 0,5 | 0,8 | 0,8 | 0,6 | 0,5 | 0,55 | 5,00 | 12,9 |
| K₂O | (Gew%) | 0,15 | - | - | 0,25 | 0,15 | - | - | 0,1 | 0,15 | 0,1 | | 3,5 |
| MgO | (Gew%) | 1,6 | 1,0 | 0,8 | 1,3 | 1,6 | 1,3 | 1,3 | 1,7 | 1,6 | 1,7 | | 3,3 |
| CaO | (Gew%) | | 1,0 | 0,5 | - | - | 0,5 | 05 | - | - | 0,2 | | 0,3 |
| ZnO | (Gew%) | 0,6 | 0,6 | - | 0,6 | 0,6 | - | - | - | 0,6 | 0,4 | | |
| TiO₂ | (Gew%) | - | - | - | - | - | - | - | - | - | - | - | 0,8 |
| ZrO₂ | (Gew%) | 1,0 | 0,7 | 0,5 | 1,0 | 1,0 | 1,0 | 1,0 | 1,0 | - | - | 6,00 | |
| P₂O₅ | (Gew%) | 0,8 | - | - | - | 0,8 | - | - | - | 0,8 | 0,7 | | |
| SnO₂ | (Gew%) | 0,5 | 0,5 | 0,5 | 0,5 | 0,5 | 0,5 | 0,5 | 0,6 | 0,5 | 0,5 | | 0,05 |
| B₂O₃ | (Gew%) | - | - | 3,0 | - | - | 2,0 | 2,0 | - | - | | | |
| SrO | (Gew%) | - | - | - | 1,0 | - | - | - | - | - | | | |
| F | (Gew%) | 0,7 | - | - | - | 1,0 | - | 0,8 | 0,8 | 0,7 | 0,85 | | |
| | | | | | | | | | | | | | |

| **Eigenschaften Glas:** | | | | | | | | | | | | | |
|---|---|---|---|---|---|---|---|---|---|---|---|---|---|
| Dichte | (g/cm³) | 2,406 | 2,420 | 2,379 | 2,424 | 2,409 | 2,382 | 2,391 | 2,424 | 2,392 | 2,3956 | 2,455 | 2,431 |
| Tg | (°C) | 645 | 708 | 680 | 706 | 633 | 682 | 621 | 674 | 646 | 660 | 504 | 623 |
| V_{A} | (°C) | 1307 | 1323 | 1305 | 1332 | 1298 | 1325 | 1298 | 1301 | 1312 | 1324 | 1078 | 1310 |
| α _{20/300} | (10⁻⁶/K) | 4,16 | 4,46 | 4,28 | 4,41 | 4,13 | 4,34 | 4,30 | 4,02 | 4,25 | 4,17 | 7,36 | 8,33 |
| Lichttransmission | | | | | | | | | | | | | |
| 4 mm Dicke, | τ (%) | 90,1 | 91,3 | 91,4 | 89,7 | 91,5 | 91,5 | 91,6 | 91,4 | 91,3 | 91,0 | n.g. | n.g. |
| E-Modul | (GPa) | 85 | 86 | 82 | 87 | 85 | 84 | 82 | n.g. | 85 | 85 | 86 | 72 |

| Chemische Beständigkeit: | | | | | | | | | | | | | |
|---|---|---|---|---|---|---|---|---|---|---|---|---|---|
| Hydrolyt. Best. | | 1 | 1 | 1 | 1 | 1 | 1 | 1 | 1 | 1 | 1 | n.g. | n.g. |
| Säurebeständigkeit | | 3 | 3 | 3 | 2 | 2 | 4 | 3 | 3 | 2 | 2-3 | n.g. | n.g. |
| Laugenbeständigkeit | | 1 | 1-2 | 2 | 1 | 1 | 2 | 2 | 1 | 2 | 2 | n.g. | n.g. |

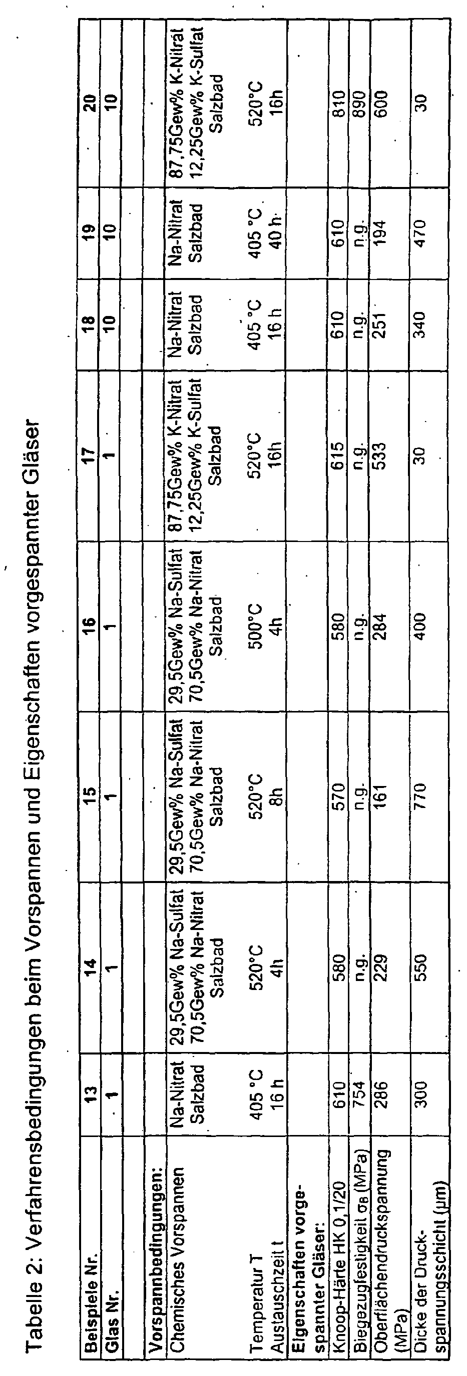

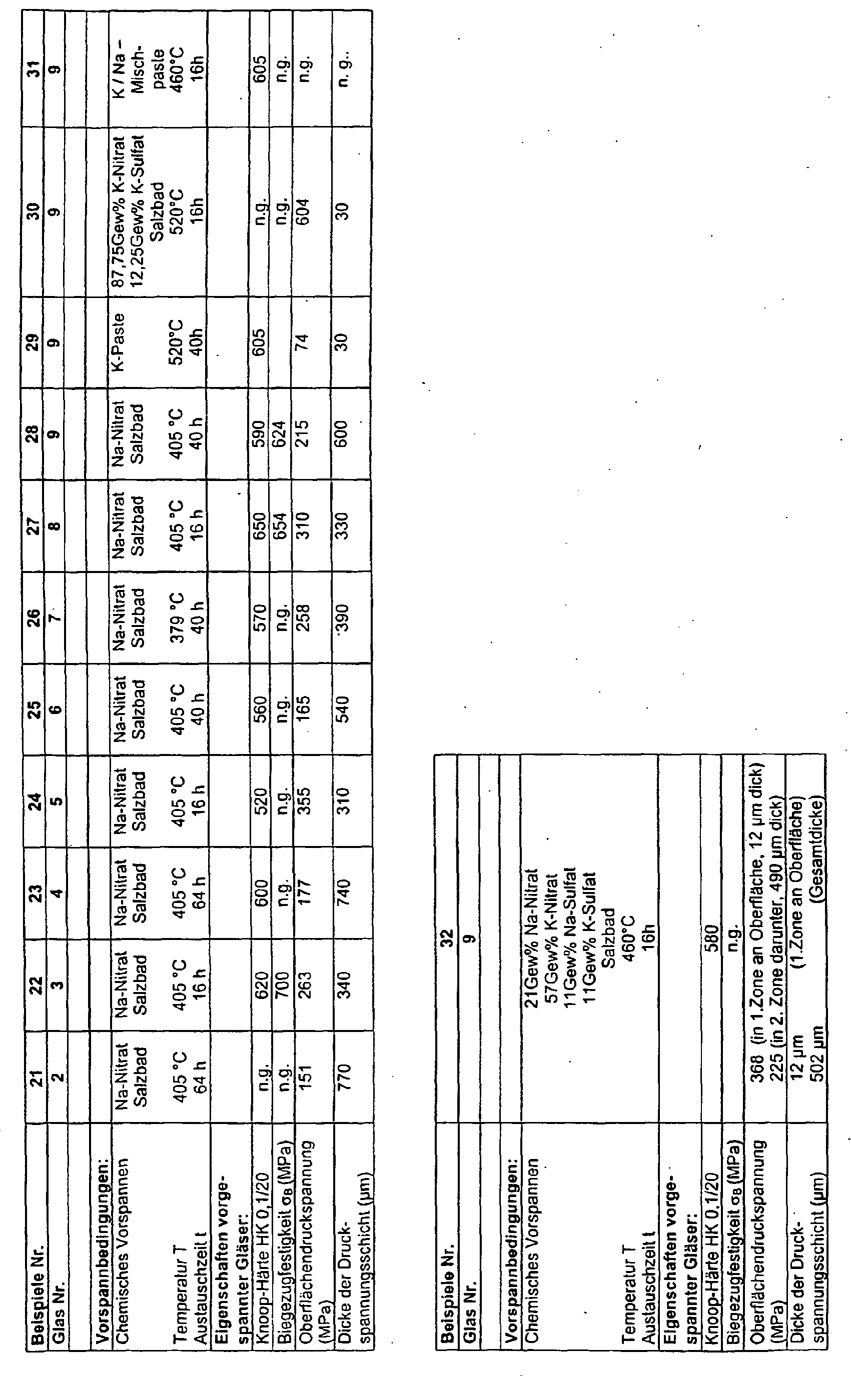

## Patentansprüche

1. Gefloatetes Lithium-Aluminosilikat-Flachglas mit hoher Temperaturbeständigkeit, das chemisch und thermisch vorspannbar ist und das ohne Verwendung der üblichen Läutermittel Arsen- und/oder Antimonoxid geläutert ist, mit einer Zusammensetzung, die in Gew.-% bezogen auf die Gesamtzusammensetzung als Hauptbestandteile enthält:
| | |
|---|---|
| Li₂O | 2,5 - 6,0 |
| Σ Na₂O + K₂O | < 4 |
| B₂O₃ | 0 - < 4 |
| Al₂O₃ | 15 - 30 |
| SiO₂ | 55 - 75 |
| Σ TiO₂ + ZrO₂ | < 2 (um die Kristallisation unerwünschter Hochquarz- und/oder Keatit-Mischkristalle zu vermeiden) |
0,1 - 2,0 Gew.-% SnO₂ als chemisches Läutermittel.

2. Gefloatetes Flachglas nach Anspruch 1, **dadurch gekennzeichnet, dass** es chemisch vorgespannt ist durch einen Ionenaustausch, bei dem Lithium an der Oberfläche gegen ein Ion mit größerem lonenradius, bevorzugt gegen Na- und/oder Kalium-lonen ausgetauscht wird und die Oberfläche dadurch eine geringere Lithiumkonzentration, verglichen mit dem Volumen, besitzt.

3. Gefloatetes Flachglas nach Anspruch 2, **dadurch gekennzeichnet, dass** der lonenaustausch bevorzugt durch Na-lonen erfolgt.

4. Gefloatetes Flachglas nach Anspruch 2, **dadurch gekennzeichnet, dass** der lonenaustausch durch eine Kombination von Na- und K-lonen in einem gemeinsamen Vorspannprozess oder zeitlich nacheinander erfolgt und das vorgespannte Flachglas ein Druckspannungsprofil mit mehreren Zonen unterschiedlicher Spannung besitzt.

5. Gefloatetes Flachglas nach mindestens einem der Ansprüche 2 bis 4,
**dadurch gekennzeichnet, dass** die durch lonenaustausch erzeugte Dicke der Druckspannungsschicht mindestens 20 µm, bevorzugt mehr als 200 µm beträgt.

6. Gefloatetes Flachglas nach mindestens einem der Ansprüche 2 bis 5, **dadurch gekennzeichnet, dass** die Oberflächen-Druckspannung > 80 MPa, bevorzugt > 200 MPa beträgt.

7. Gefloatetes Flachglas nach mindestens einem der Ansprüche 2 bis 6 **dadurch gekennzeichnet, dass** das chemische Vorspannen bei Zeiten von 15 min -100 Stunden, bevorzugt < 50 Stunden und Temperaturen von 300 bis 650°C, unterhalb der Transformationstemperatur T₉ des Glases durchgeführt ist.

8. Gefloatetes Flachglas nach mindestens einem der Ansprüche 2 bis 7, **gekennzeichnet durch** eine Biegezugfestigkeit > 300 MPa, bevorzugt > als 600 MPa.

9. Gefloatetes Flachglas nach Anspruch 1, **dadurch gekennzeichnet, dass** das Flachglas thermisch vorgespannt ist.

10. Gefloatetes Flachglas nach Anspruch 9, **dadurch gekennzeichnet, dass** das thermische Vorspannen durch Erhitzen auf eine Temperatur ca. 50 bis 120 °C oberhalb der Transformationstemperatur T_{g} des Glases und Anblasen mit Luft durchgeführt ist.

11. Gefloatetes Flachglas nach mindestens einem der Ansprüche 9 bis 10, **dadurch gekennzeichnet, dass** die Oberflächen-Druckspannung > 40 MPa, bevorzugt > 120 MPa beträgt und die Dicke der Druckspannungsschicht > 200 µm, bevorzugt > 500 µm beträgt.

12. Gefloatetes Flachglas nach mindestens einem der vorhergehenden Ansprüche, **gekennzeichnet durch** einen Wärmeausdehnungskoeffizienten α_{20/300} zischen 3,5 und 5,0 · 10⁻⁶/K, eine Transformationstemperatur T_{g} zwischen 580 und 720 °C und eine Verarbeitungstemperatur V_{A} zwischen 1240-1340 °C.

13. Gefloatetes Flachglas nach mindestens einem der vorhergehenden Ansprüche, **gekennzeichnet durch** hohe Kratzfestigkeit, wobei die Knoophärte > 500, bevorzugt > 550 beträgt.

14. Gefloatetes Flachglas nach mindestens einem der vorhergehenden Ansprüche, **gekennzeichnet durch** eine Dichte von weniger 2,5 g/cm³, bevorzugt weiniger als 2,42 g/cm³.

15. Gefloatetes Flachglas nach mindestens einem der vorhergehenden Ansprüche, **gekennzeichnet durch** ein hohes E-Modul von > 70 GPa, bevorzugt > 80 GPa.

16. Gefloatetes Flachglas nach mindestens einem der vorhergehenden Ansprüche, **gekennzeichnet durch** gute chemische Beständigkeit gegen Wasser, Säuren und Laugen mit hydrolytischer Beständigkeit Klasse 1, Säurebeständigkeit mindestens Klasse 3 und einer Laugenbeständigkeit von mindestens Klasse 2.

17. Gefloatetes Flachglas nach mindestens einem der vorhergehenden Ansprüche, **gekennzeichnet durch** eine Zusammensetzung, die in Gew.% bezogen auf die Gesamtzusammensetzung als Hauptbestandteile enthält:
| | |
|---|---|
| Li₂O | 3,0 - 6,0 |
| Σ Na₂O + K₂O | < 2 |
| Σ MgO + CaO + SrO + BaO | < 4 |
| ZnO | 0 - 1,5 |
| B₂O₃ | 0 - < 4 |
| Al₂O₃ | 18 - 28 |
| SiO₂ | 60 - 72 |
| Σ TiO₂ + ZrO₂ | < 2 (um die Kristallisation unerwünschter Hochquarz- und/oder Keatit-Mischkristalle zu vermeiden) |
| SnO₂ | 0,1 -1,5 (als Läutermittel) |
| F | 0 - 2 |
| P₂O₅ | 0 - 3 |

18. Gefloatetes Flachglas nach mindestens einem der vorhergehenden Ansprüche, **gekennzeichnet durch** einen Wärmeausdehnungskoeffizienten α_{20/300} zwischen 3,8 und 4,5 · 10⁻⁶/K, eine Transformationstemperatur T_{g} zwischen 600 und 680°C, eine Verarbeitungstemperatur V_{A} zwischen 1280 - 1320° C, und eine Zusammensetzung, die in Gew.-% bezogen auf die Gesamtzusammensetzung als Hauptbestandteile enthält:
| | |
|---|---|
| Li₂O | 3,5 - 5,0 |
| Σ Na₂O + K₂O | < 1,5 |
| Σ MgO + CaO + SrO + BaO | < 3 |
| ZnO | 0 - 1,0 |
| B₂O₃ | 0 - < 3 |
| Al₂O₃ | 19 - 26 |
| SiO₂ | 62 - 70 |
| Σ TiO₂ + ZrO₂ | < 1,5 (um die Kristallisation unerwünschter Hochquarz- und/oder Keatit-Mischkristalle zu vermeiden) |
| SnO₂ | 0,1 - 1,0 (als Läutermittel) |
| F | 0 - 1,8 |
| P₂O₅ | 0 - 2 |

19. Gefloatetes Flachglas nach mindestens einem der vorhergehenden Ansprüche, **gekennzeichnet durch** einen Fluorgehalt F von 0,1-1,2 Gew.-%.

20. Gefloatetes Flachglas nach mindestens einem der vorhergehenden Ansprüche, **gekennzeichnet durch** eine Zusammensetzung bei der das Glas technisch frei von BaO ist.

21. Gefloatetes Flachglas nach mindestens einem der vorhergehenden Ansprüche, **gekennzeichnet dadurch, dass** zum Erreichen einer geringen Blasenzahl neben dem eingesetzten Läutermittel SnO₂ wenigstens ein weiteres mit dem Floatprozess verträgliches chemisches Läuterhilfsmittel, wie zum Beispiel Ceroxid, Sulfatverbindungen, Chloridverbindungen, Fluorverbindungen der Glasschmelze zugesetzt ist.

22. Gefloatetes Flachglas nach wenigstens einem der vorhergehenden Ansprüche, **gekennzeichnet dadurch, dass** zum Erreichen einer geringen Blasenzahl die Glasschmelze physikalisch zum Beispiel mittels Unterdruck oder mittels Hochtemperatur > 1680°C, bevorzugt > 1730° C geläutert ist.

23. Gefloatetes Flachglas nach mindestens einem der vorhergehenden Ansprüche, **gekennzeichnet durch** Gehalte von weniger als 250 ppm Fe₂O₃ und weniger als 1 Gew% TiO₂ und eine Lichttransmission bei 4 mm Dicke von > 90 %, bevorzugt > 91 %.

24. Gefloatetes Flachglas nach wenigstens einem der vorhergehenden Ansprüche, **gekennzeichnet dadurch, dass** die Absorption im UV und/oder Infraroten durch Zusätze wie zum Beispiel Eisenoxid, Selenoxid, Nickeloxid, Cobaltoxid, Ceroxid, Kupferoxid, Titanoxid mit einer Gesamtmenge < 1 Gew.-% eingestellt ist.

25. Gefloatetes Flachglas nach wenigstens einem der vorhergehenden Ansprüche, **gekennzeichnet dadurch, dass** durch Zusatz von Entfärbemitteln, wie zum Beispiel Manganoxid oder Selenoxid oder Überfärbemitteln wie zum Beispiel Kobaltoxid, Nickeloxid, Chromoxid oder Seltenerdoxiden ein aufgrund von Kontamination oder UV- bzw. IRabsorbierenden Stoffen vorhandener Farbstich gemindert wird und der Farbort in Richtung des Unbuntpunktes verschoben ist.

26. Gefloatetes Flachglas nach wenigstens einem der vorhergehenden Ansprüche, **gekennzeichnet dadurch, dass** das Glas mit Färbemitteln wie zum Beispiel Vanadin-, Chrom-, Kobalt-, Eisen-, Chrom-, Kupfer-, Nickel-Verbindungen eingefärbt ist und die Lichttransmission bei 4 mm Dicke < 80 % beträgt.

27. Verwendung eines gefloateten Flachglas nach wenigstens einem der vorhergehenden Ansprüche für Anwendungen mit hohen Anforderungen an Festigkeit und/oder Kratzfestigkeit, wie zum Beispiel als Sicherheitsglas in der Luftfahrt- oder Raumfahrtverglasung sowie Verkehrstechnik, als Kesselschauglas, Zentrifugenglas, Uhrenglas, Abdeckung in Scannergeräten, Harddisc-Speichersubstrat, Verglasung von Räumen, in denen ein hoher Temperaturgradient zwischen innen und außen vorhanden ist, sowie für Anwendungen mit hohen Anforderungen and die Temperaturbeständigkeit, wie z.B. im Beleuchtungssektor, als Brandschutzverglasung oder als Backofen- bzw. Kaminsichtscheiben.

## Claims

1. Lithium-aluminosilicate flat float glass with a high thermal stability, which can be chemically and thermally tempered and is refined without using the standard refining agents arsenic oxide and/or antimony oxide, having a composition which, in % by weight based on the total composition, contains the following main constituents:
| | |
|---|---|
| Li₂O | 2.5 - 6.0 |
| Σ Na₂O + K₂O | <4 |
| B₂O₃ | 0 - <4 |
| Al₂O₃ | 15 - 30 |
| SiO₂ | 55 - 75 |
| Σ TiO₂ + ZrO₂ | <2 (in order to avoid the crystallization of undesirable beta-quartz and/or keatite solid solutions) |
0.1 - 2.0% by weight of SnO₂ as chemical refining agent.

2. Flat float glass according to Claim 1, **characterized in that** it is chemically tempered by ion exchange in which lithium at the surface is exchanged for an ion with a larger ion radius, preferably for Na and/or potassium ions, and as a result the surface has a lower lithium concentration than the volume.

3. Flat float glass according to Claim 2, **characterized in that** the ion exchange is preferably effected by Na ions.

4. Flat float glass according to Claim 2, **characterized in that** the ion exchange is effected by a combination of Na and K ions in a common tempering process or in succession, and the tempered flat glass has a compressive stress profile with a plurality of zones of different stress levels.

5. Flat float glass according to at least one of Claims 2 to 4, **characterized in that** the thickness of the compressive-stress layer produced by ion exchange is at least 20 µm, preferably more than 200 µm.

6. Flat float glass according to at least one of Claims 2 to 5, **characterized in that** the surface compressive stress is >80 MPa, preferably >200 MPa.

7. Flat float glass according to at least one of Claims 2 to 6, **characterized in that** the chemical tempering is carried out over the course of 15 min - 100 hours, preferably <50 hours, and at temperatures of from 300 to 650°C, below the transformation temperature Tg of the glass.

8. Flat float glass according to at least one of Claims 2 to 7, **characterized by** a tensile bending strength of >300 MPa, preferably >600 MPa.

9. Flat float glass according to Claim 1, **characterized in that** the flat glass is thermally tempered.

10. Flat float glass according to Claim 10, **characterized in that** the thermal tempering is carried out by heating to a temperature approx. 50 to 120°C above the transformation temperature T_{g} of the glass and blowing air onto the glass.

11. Flat float glass according to at least one of Claims 9 to 10, **characterized in that** the surface compressive stress is >40 MPa, preferably >120 MPa, and the thickness of the compressive-stress layer is >200 µm, preferably >500 µm.

12. Flat float glass according to at least one of the preceding claims, **characterized by** a coefficient of thermal expansion α_{20/300} of between 3.5 and 5.0 · 10⁻⁶/K, a transformation temperature Tg of between 580 and 720°C, and a working point V_{A} of between 1240 - 1340°C.

13. Flat float glass according to at least one of the preceding claims, **characterized by** a high scratch resistance, with the Knoop hardness being >500, preferably >550.

14. Flat float glass according to at least one of the preceding claims, **characterized by** a density of less than 2.5 g/cm³, preferably less than 2.42 g/cm³.

15. Flat float glass according to at least one of the preceding claims, **characterized by** a high modulus of elasticity of >70 GPa, preferably >80 GPa.

16. Flat float glass according to at least one of the preceding claims, **characterized by** a good chemical resistance to water, acids and alkalis, with a Class 1 hydrolytic resistance, at least Class 3 acid resistance and at least Class 2 alkali resistance.

17. Flat float glass according to at least one of the preceding claims, **characterized by** a composition which, in % by weight based on the total composition, contains the following main constituents:
| | |
|---|---|
| Li₂O | 3.0 - 6.0 |
| Σ Na₂O + K₂O | <2 |
| Σ MgO + CaO + SrO + BaO | <4 |
| ZnO | 0 - 1.5 |
| B₂O | 0 - <4 |
| Al₂O₃ | 18 - 28 |
| SiO₂ | 60 - 72 |
| Σ TiO₂ + ZrO₂ | <2 (in order to avoid the crystallization of undesirable beta-quartz and/or keatite solid solutions) |
| SnO₂ | 0.1 - 1.5 (as refining agent) |
| F | 0 - 2 |
| P₂O₅ | 0 - 3. |

18. Flat float glass according to at least one of the preceding claims, **characterized by** a coefficient of thermal expansion α_{20/300} of between 3.8 and 4.5 · 10⁻⁶/K, a transformation temperature Tg of between 600 and 680°C, a working point V_{A} of between 1280 - 1320°C, and a composition which, in % by weight based on the total composition, contains the following main constituents:
| | |
|---|---|
| Li₂O | 3.5 - 5.0 |
| Σ Na₂O + K₂O | <1.5 |
| E MgO + CaO + SrO + BaO | <3 |
| ZnO | 0 - 1.0 |
| B₂O₃ | 0 - <3 |
| Al₂O₃ | 19 - 26 |
| SiO₂ | 62 - 70 |
| Σ TiO₂ + ZrO₂ | <1.5 (in order to avoid the crystallization of undesirable beta-quartz and/or keatite solid solutions) |
| SnO₂ | 0.1 - 1.0 (as |
| | refining agent) |
| F | 0 - 1.8 |
| P₂O₅ | 0 - 2. |

19. Flat float glass according to at least one of the preceding claims, **characterized by** a fluorine content F of 0.1 - 1.2% by weight.

20. Flat float glass according to at least one of the preceding claims, **characterized by** a composition in which the glass is technically BaO-free.

21. Flat float glass according to at least one of the preceding claims, **characterized in that**, to achieve a low number of bubbles, in addition to the refining agent SnO₂ used, at least one further chemical refining agent which is compatible with the float process, such as for example cerium oxide, sulphate compounds, chloride compounds, fluorine compounds is added to the glass melt.

22. Flat float glass according to at least one of the preceding claims, **characterized in that**, to achieve a low number of bubbles the glass melt is refined physically, for example by means of reduced pressure or by means of high temperature >1680°C, preferably >1730°C.

23. Flat float glass according to at least one of the preceding claims, **characterized by** an Fe₂O₃ content of less than 250 ppm and a TiO₂ content of less than 1% by weight, and a light transmission, at a thickness of 4 mm, of >90%, preferably >91%.

24. Flat float glass according to at least one of the preceding claims, **characterized in that** the absorption in the UV and/or infrared is set by means of additions, such as for example iron oxide, selenium oxide, nickel oxide, cobalt oxide, cerium oxide, copper oxide, titanium oxide, in a total quantity of < 1% by weight.

25. Flat float glass according to at least one of the preceding claims, **characterized in that** a colour cast which is present as a result of contamination or UV- and/or IR-absorbing substances is reduced by the addition of decolourizing agents, such as for example manganese oxide or selenium oxide, or colour-change agents, such as for example cobalt oxide, nickel oxide, chromium oxide or rare earth oxides, and the colour locus is shifted towards the achromatic point.

26. Flat float glass according to at least one of the preceding claims, **characterized in that** the glass is coloured using colouring agents, such as for example vanadium, chromium, cobalt, iron, chromium, copper, nickel compounds, and the light transmission at a thickness of 4 mm is <80%.

27. Use of a flat float glass according to at least one of the preceding claims for applications in which high demands are imposed on the strength and/or scratch resistance, for example as safety glass in aerospace and/or aeronautical glazing and traffic engineering, as boiler inspection glass, centrifuge glass, clock glass, as a cover in scanner appliances, as a hard disk memory substrate, glazing for rooms in which there is a high temperature gradient between the inside and outside, and for applications with high demands on the thermal stability, for example in the illumination sector, as fireproof glazing or as oven or chimney viewing windows.

## Revendications

1. Verre plat flotté à l'aluminosilicate et au lithium, à bonne tenue aux hautes températures, apte à être précontraint chimiquement ou thermiquement, affiné sans recours aux agents habituels d'affinage que sont l'oxyde d'arsenic et/ou l'oxyde d'antimoine et dont la composition en % en poids par rapport à la composition totale contient comme composants principaux :
| | |
|---|---|
| Li₂O | 2, 5 - 6,0 |
| Σ Na₂O + K₂O | < 4 |
| B₂O₃ | 0 - < 4 |
| Al₂O₃ | 15 - 30 |
| SiO₂ | 55 - 75 |
| Σ TiO₂ + ZrO₂ | < 2 (pour éviter la cristallisation indésirable de cristaux mixtes de quartz bêta et/ou de keatite) |
et de 0,1 à 2,0 % en poids de SnO₂ comme agent d'affinage chimique.

2. Verre plat flotté selon la revendication 1, **caractérisé en ce qu'**il est précontraint chimiquement par un échange d'ions dans lequel le lithium présent en surface est échangé avec un ion dont le rayon ionique est plus grand, de préférence des ions de Na et/ou de potassium, la surface obtenant ainsi une plus basse concentration en lithium que le volume.

3. Verre plat flotté selon la revendication 2, **caractérisé en ce que** l'échange d'ions s'effectue de préférence avec des ions de Na.

4. Verre plat flotté selon la revendication 2, **caractérisé en ce que** l'échange d'ions s'effectue avec une combinaison d'ions de Na et d'ions de K, simultanément dans une opération commune de précontrainte ou successivement, et **en ce que** le verre plat précontraint possède un profil de contrainte de compression qui présente plusieurs zones de contrainte différentes.

5. Verre plat flotté selon au moins l'une quelconque des revendications 2 à 4, **caractérisé en ce que** l'épaisseur de la couche de contrainte de compression créée par échange d'ions est d'au moins 20 µm et de préférence supérieure à 200 µm.

6. Verre plat flotté selon au moins l'une quelconque des revendications 2 à 5, **caractérisé en ce que** la contrainte de compression en surface est > 80 MPa et de préférence > 200 MPa.

7. Verre plat flotté selon au moins l'une quelconque des revendications 2 à 6, **caractérisé en ce que** la précontrainte chimique est réalisée pendant une durée de 15 min à 100 heures, de préférence de < 50 heures et à une température de 300 à 650 °C, inférieure à la température de transition vitreuse Tg du verre.

8. Verre plat flotté selon au moins l'une quelconque des revendications 2 à 7, **caractérisé par** une résistance à la traction en flexion > 300 MPa et de préférence > 600 MPa.

9. Verre plat flotté selon la revendication 1, **caractérisé en ce que** le verre plat est précontraint thermiquement.

10. Verre plat flotté selon la revendication 9, **caractérisé en ce que** la précontrainte thermique est réalisée par chauffage à une température située environ 50 à 120 °C au-dessus de la température de transition vitreuse Tg du verre et par soufflage d'air.

11. Verre plat flotté selon au moins l'une quelconque des revendications 9 à 10, **caractérisé en ce que** la contrainte de compression en surface est > 40 MPa et de préférence > 120 MPa et **en ce que** l'épaisseur de la couche de contrainte de compression est > 200 µm et de préférence > 500 µm.

12. Verre plat flotté selon au moins l'une quelconque des revendications précédentes, **caractérisé par** un coefficient de dilatation thermique α_{20/300} compris entre 3,5 et 5,0. 10⁻⁶/K, par une température de transition vitreuse T_{g} comprise entre 580 et 720 °C et par une température de traitement V_{A} comprise entre 1 240 et 1 340 °C.

13. Verre plat flotté selon au moins l'une quelconque des revendications précédentes, **caractérisé par** une haute résistance aux rayures, avec une dureté Knoop > 500 et de préférence > 550.

14. Verre plat flotté selon au moins l'une quelconque des revendications précédentes, **caractérisé par** une masse spécifique inférieure à 2,5 g/cm³ et de préférence inférieure à 2,42 g/cm³.

15. Verre plat flotté selon au moins l'une quelconque des revendications précédentes, **caractérisé par** un module d'élasticité élevé, > 70 GPa et de préférence > 80 GPa.

16. Verre plat flotté selon au moins l'une quelconque des revendications précédentes, **caractérisé par** une bonne résistance chimique vis-à-vis de l'eau, des acides et des bases, avec une résistance à l'hydrolyse de classe 1, une résistance aux acides au moins de classe 3 et une résistance aux bases au moins de classe 2.

17. Verre plat flotté selon au moins l'une quelconque des revendications précédentes, **caractérisé par** une composition qui contient en % en poids par rapport à la composition totale comme composants principaux :
| | |
|---|---|
| Li₂O | 3,0 - 6,0 |
| Σ Na₂O + K₂O | < 2 |
| Σ MgO + CaO+ SrO + BaO | < 4 |
| ZnO | 0 - 1,5 |
| B₂O₃ | 0 - < 4 |
| Al₂O₃ | 18 - 28 |
| SiO₂ | 60 - 72 |
| Σ TiO₂ + ZrO₂ | < 2 (pour éviter la cristallisation indésirable de cristaux mixtes de quartz bêta et/ou de keatite) |
| SnO₂ | 0,1 - 1,5 (comme agent d'affinage) |
| F | 0 - 2 |
| P₂O₅ | 0 - 3 |

18. Verre plat flotté selon au moins l'une quelconque des revendications précédentes, **caractérisé par** un coefficient de dilatation thermique α_{20/300} compris entre 3,8 et 4,5. 10⁻⁶/K, une température de transition vitreuse Tg comprise entre 600 et 680 °C, une température de traitement VA comprise entre 1 280 et 1 320 °C et une composition qui contient en % en poids par rapport à la composition totale des composants principaux :
| | |
|---|---|
| Li₂O | 3,5 - 5,0 |
| Σ Na₂O + K₂O | < 1,5 |
| Σ MgO + CaO | < 3 |
| + SrO + BaO | |
| ZnO | 0 - 1,0 |
| B₂O₃ | 0 - < 3 |
| Al₂O₃ | 19 - 26 |
| SiO₂ | 62 - 70 |
| Σ TiO₂ + ZrO₂ | < 1,5 (pour éviter la cristallisation indésirable de cristaux mixtes de quartz bêta et/ou de keatite) |
| SnO₂ | 0,1 - 1,0 (comme agent d'affinage) |
| F | 0 - 1,8 |
| P₂O₅ | 0 - 2 |

19. Verre plat flotté selon au moins l'une quelconque des revendications précédentes, **caractérisé par** une teneur en fluor F comprise entre 0,1 et 1,2 % en poids.

20. Verre plat flotté selon au moins l'une quelconque des revendications précédentes, **caractérisé par** une composition dans laquelle le verre est techniquement exempt de BaO.

21. Verre plat flotté selon au moins l'une quelconque des revendications précédentes, **caractérisé en ce que** pour obtenir un petit nombre de bulles, on ajoute au verre en fusion, en plus de l'agent d'affichage SnO₂ utilisé, au moins un autre agent auxiliaire d'affinage chimique compatible avec l'opération de flottage, par exemple l'oxyde de cérium, des composés de sulfate, des composés de chlorure ou des composés du fluor.

22. Verre plat flotté selon au moins l'une quelconque des revendications précédentes, **caractérisé en ce que** pour obtenir un petit nombre de bulles, on affine physiquement le verre en fusion, par exemple par dépression ou à l'aide d'une haute température > 1 680 °C et de préférence > 1 730 °C.

23. Verre plat flotté selon au moins l'une quelconque des revendications précédentes, **caractérisé par** une teneur en Fe₂O₃ inférieure à 250 ppm et une teneur en TiO₂ inférieure à 1 % en poids et dont la transmission de lumière à une épaisseur de 4 mm est > 90 % et de préférence > 91 %.

24. Verre plat flotté selon au moins l'une quelconque des revendications précédentes, **caractérisé en ce que** l'absorption dans l'UV et/ou l'infrarouge est ajustée par des additifs, par exemple l'oxyde de fer, l'oxyde de sélénium, l'oxyde de nickel, l'oxyde de cobalt, l'oxyde de cérium, l'oxyde de cuivre ou l'oxyde de titane en une quantité totale < 1 % en poids.

25. Verre plat flotté selon au moins l'une quelconque des revendications précédentes, **caractérisé en ce que** par addition d'agents colorants, par exemple l'oxyde de manganèse ou l'oxyde de sélénium, ou d'agents de sur-coloration, par exemple l'oxyde de cobalt, l'oxyde de nickel, l'oxyde de chrome ou des oxydes de terres rares, on diminue la coloration due à une contamination ou à des substances qui absorbent les UV ou les IR, la localisation chromatique étant ainsi déplacée en direction du point achromatique.

26. Verre plat flotté selon au moins l'une quelconque des revendications précédentes, **caractérisé en ce que** le verre est coloré à l'aide d'agents de coloration tels que des composés de vanadium, de chrome, de cobalt, de fer, de chrome, de cuivre ou de nickel et **en ce que** la transmission de lumière à une épaisseur de 4 mm est < 80 %.

27. Utilisation d'un verre plat flotté selon au moins l'une quelconque des revendications précédentes dans des applications très exigeantes en termes de résistance mécanique et/ou de résistance aux rayures, par exemple comme verre de sécurité pour le vitrage dans le domaine du transport aérien ou le domaine spatial, ainsi que dans la technique de circulation, comme verre pour hublots de chaudière, verre pour centrifugeuses, verre de montre, recouvrement de scanners, supports de mémoire à disque dur, vitrage de locaux qui présentent un haut gradient de température entre l'intérieur et l'extérieur ainsi que dans des applications très exigeantes en termes de tenue aux hautes températures, par exemple dans le secteur de l'éclairage, en vitrage antifeu ou comme vitre d'observation de fours de cuisson ou de cheminées.
